# EUROPEAN PATENT APPLICATION

(11) **EP 4 554 168 A1**
(43) Date of publication of application: **14.05.2025**
(21) Application number: 23845650.3
(22) Date of filing: 27.07.2023
(51) Int. Cl.: H04L 41/0896, H04L 43/08

(54) **RESOURCE AUTOSCALING METHOD AND APPARATUS, AND DEVICE**

(30) Priority: 29.07.2022 CN 202210905626
(71) Applicant: Huawei Cloud Computing Technologies Co., Ltd., Guiyang, Guizhou 550025 (CN)
(72) Inventor: QU, Yongxiu, Guiyang, Guizhou 550025 (CN); LIU, Yiyang, Guiyang, Guizhou 550025 (CN); WANG, Nannan, Guiyang, Guizhou 550025 (CN); YANG, Changpeng, Guiyang, Guizhou 550025 (CN)
(74) Representative: Pfenning, Meinig & Partner mbB
(86) International application number: PCT/CN2023/109593
(87) International publication number: WO 2024/022443

(57) **Abstract**

This application discloses an automatic resource scaling method and apparatus, and a device. In the method, first load information and second load information are obtained, where the first load information indicates current actual load information, and the second load information is load information used to estimate a future load; and whether to perform resource scale-out or resource scale-in is determined based on the first load information and the second load information. A control node can determine a current actual load status based on the first load information, and can further estimate a load in a future period of time based on the second load information, to determine, based on the current actual load status and the estimated load status in the future period of time, whether to perform resource scale-out or scale-in. In this way, an available resource of a system better meets an actual requirement, and a delay caused by an auto scaling policy is reduced.

## Description

### CROSS-REFERENCE TO RELATED APPLICATIONS

This application claims priority to Chinese Patent Application No. 202210905626.1, filed with the China National Intellectual Property Administration on July 29, 2022 and entitled "AUTOMATIC RESOURCE SCALING METHOD AND APPARATUS, AND DEVICE", which is incorporated herein by reference in its entirety.

### TECHNICAL FIELD

This application relates to the field of computer technologies, and in particular, to an automatic resource scaling method and apparatus, and a device.

### BACKGROUND

If current computing and storage resources cannot meet service requirements, a plurality of servers (or nodes, instances, or the like) may be added to implement joint access and joint service provision. If current computing and storage resources are excessive, a quantity of servers (or nodes, instances, or the like) that provide services may be reduced to avoid a resource waste.

To automatically implement the foregoing operations, a concept of auto scaling (auto scaling, AS) is proposed. AS may set a scaling rule based on service requirements and policies to automatically adjust a quantity of backend servers (or nodes, instances, or the like). Currently, most AS implementations are controlled based on CPU and memory usage. For example, if the CPU usage reaches an upper threshold limit, resource scale-out is performed, or if the CPU usage reaches a lower threshold limit, resource scale-in is performed.

In scenarios such as a public cloud, an edge cloud, and a content delivery network (content delivery network, CDN), improving resource utilization of an AS service to reduce costs is an ever-present issue. Due to an unknown service change and a delay of an auto scaling policy, a scaling policy in a current service is often inaccurate and a large quantity of resources are wasted.

### SUMMARY

Embodiments of this application provide an automatic resource scaling method and apparatus, and a device, to implement automatic resource scale-out or scale-in, and help avoid a delay problem of resource scale-out and scale-in.

According to a first aspect, an embodiment of this application provides an automatic resource scaling method, including: obtaining first load information and second load information, where the first load information indicates current actual load information, and the second load information is load information used to estimate a future load; and determining, based on the first load information and the second load information, whether to perform resource scale-out or resource scale-in.

In the foregoing embodiment, a control node can determine a current actual load status based on the obtained first load information, and can further estimate a load status in a future period of time based on the second load information, to determine, based on the current actual load status and the estimated load status in the future period of time, whether to perform resource scale-out or scale-in. Compared with a conventional solution in which scale-out or scale-in is performed only based on current resource utilization, the foregoing solution can determine, with reference to a pre-determined load status, whether to perform resource scale-out or scale-in, so that an available resource of a system better meets an actual requirement, and a delay caused by an auto scaling policy is reduced.

In a possible implementation, the determining, based on the first load information and the second load information, whether to perform resource scale-out or resource scale-in includes: determining, based on the first load information, whether a first resource scale-out condition or a first resource scale-in condition is met; determining, based on the second load information, whether a second resource scale-out condition or a second resource scale-in condition is met; and if the first resource scale-out condition is met and the second resource scale-in condition is not met, or if the second resource scale-out condition is met and the first resource scale-in condition is not met, determining to perform resource scale-out; or if the first resource scale-in condition is met and the second resource scale-out condition is not met, or if the second resource scale-in condition is met and the first resource scale-out condition is not met, determining to perform resource scale-in. If both the first resource scale-out condition and the second resource scale-in condition are met, it indicates that, although a current actual load is heavy, the load is predicted to significantly decrease in a future period of time, and the control node may determine that resource scale-out does not need to be performed. In this way, a significant decrease in resource utilization due to a decrease in a service volume after resource scale-out can be avoided to avoid a resource waste. If both the first resource scale-in condition and the second resource scale-out condition are met, it indicates that, although a current actual load is light, the load is predicted to significantly increase in a future period of time, and the control node may determine that resource scale-in does not need to be performed. In this way, issues of a heavy load and impact on quality of service of a service caused by an increase in a service volume after resource scale-in can be avoided.

In a possible implementation, the method further includes: if determining, based on the first load information, that the first resource scale-out condition is met, determining a first scale-out step based on the first load information; if determining, based on the second load information, that the second resource scale-out condition is met, determining a second scale-out step based on the second load information; and performing resource scale-out based on a larger step of the first scale-out step and the second scale-out step; or if determining, based on the first load information, that the first resource scale-in condition is met, determining a first scale-in step based on the first load information; if determining, based on the second load information, that the second resource scale-in condition is met, determining a second scale-in step based on the second load information; and performing resource scale-in based on a larger step of the first scale-in step and the second scale-in step. If the first step determined by the control node based on the first load information is different from the second step determined based on the second load information, the control node may perform resource scale-out based on the larger step of the first step and the second step, to better meet a user requirement.

In a possible implementation, the second load information includes a change rate of a used resource in a preset time period, and/or a change rate of a service volume in a preset time period.

In a possible implementation, the second load information includes historical load information of a same time period.

In a possible implementation, the method further includes: obtaining, from different resource pools, configuration information of nodes that with ability to be scaled out, where nodes in the different resource pools have different configuration information; and when determining to perform resource scale-out, determining, based on a resource that needs to be scaled out and the configuration information of each node that with ability to be scaled out, a node to be scaled out.

In a possible implementation, the method further includes: obtaining configuration information of currently used nodes; and when determining to perform resource scale-in, determining, based on a resource that needs to be scaled in and the configuration information of each currently used node, a node to be scaled in. When resource scale-out or scale-in is performed, a node with a high resource configuration and a node with a low resource configuration are fully utilized, which is more conducive to improving overall resource utilization of a system and reducing resource use costs.

According to a second aspect, an embodiment of this application provides an automatic resource scaling apparatus, including: an obtaining module, configured to obtain first load information and second load information, where the first load information indicates current actual load information, and the second load information is load information used to estimate a current or future load; and a determining module, configured to determine, based on the first load information and the second load information, whether to perform resource scale-out or resource scale-in.

In a possible implementation, the determining module is specifically configured to: determine, based on the first load information, whether a first resource scale-out condition or a first resource scale-in condition is met; determine, based on the second load information, whether a second resource scale-out condition or a second resource scale-in condition is met; and if the first resource scale-out condition is met and the second resource scale-in condition is not met, or if the second resource scale-out condition is met and the first resource scale-in condition is not met, determine to perform resource scale-out; or if the first resource scale-in condition is met and the second resource scale-out condition is not met, or if the second resource scale-in condition is met and the first resource scale-out condition is not met, determine to perform resource scale-in.

In a possible implementation, the determining module is further configured to: if determining, based on the first load information, that the first resource scale-out condition is met, determine a first scale-out step based on the first load information; if determining, based on the second load information, that the second resource scale-out condition is met, determine a second scale-out step based on the second load information; and perform resource scale-out based on a larger step of the first scale-out step and the second scale-out step; or if determining, based on the first load information, that the first resource scale-in condition is met, determine a first scale-in step based on the first load information; if determining, based on the second load information, that the second resource scale-in condition is met, determine a second scale-in step based on the second load information; and perform resource scale-in based on a larger step of the first scale-in step and the second scale-in step.

In a possible implementation, the second load information includes a change rate of a used resource in a preset time period, and/or a change rate of a service volume in a preset time period.

In a possible implementation, the second load information includes historical load information of a same time period.

In a possible implementation, the obtaining module is further configured to obtain, from different resource pools, configuration information of nodes that with ability to be scaled out, where nodes in the different resource pools have different configuration information; and the determining module is further configured to: when determining to perform resource scale-out, determine, based on a resource that needs to be scaled out and the configuration information of each node that with ability to be scaled out, a node to be scaled out.

In a possible implementation, the obtaining module is further configured to obtain configuration information of currently used nodes; and the determining module is further configured to: when determining to perform resource scale-in, determine, based on a resource that needs to be scaled in and the configuration information of each currently used node, a node to be scaled in.

According to a third aspect, an embodiment of this application provides a computer device, where the computer device includes a memory and a processor; the memory stores a computer program; and the processor is configured to invoke the computer program stored in the memory, to perform the method according to any one of the first aspect and the implementations of the first aspect.

According to a fourth aspect, an embodiment of this application provides an automatic resource scaling system, including the automatic resource scaling apparatus according to any one of the second aspect and the implementations of the second aspect, and a plurality of nodes that provide resources.

According to a fifth aspect, an embodiment of this application provides a computer-readable storage medium, where the computer-readable storage medium stores instructions; and when the instructions are run on a computer, the computer is enabled to perform the method according to any one of the first aspect and the implementations of the first aspect.

According to a sixth aspect, an embodiment of this application provides a computing device cluster, including at least one computing device, where each computing device includes a processor and a memory; and the processor of the at least one computing device is configured to execute instructions stored in the memory of the at least one computing device, to enable the computing device cluster to perform the method according to any one of the first aspect and the implementations of the first aspect.

According to a seventh aspect, an embodiment of this application provides a computer program product including instructions, where when the instructions are run by a computing device cluster, the computing device cluster is enabled to perform the method according to any one of the first aspect and the implementations of the first aspect.

According to an eighth aspect, an embodiment of this application provides a computer program product including instructions; and when the computer program product runs on a computer, the method according to the first aspect or any one of the implementations of the first aspect is performed.

For technical effects that can be implemented by any one of the implementations of any one of the second aspect to the eighth aspect, refer to the descriptions of the technical effects that can be achieved in the corresponding implementation solution in the first aspect. Repeated parts are not described herein.

### BRIEF DESCRIPTION OF DRAWINGS

FIG. 1 is a schematic flowchart of an automatic resource scaling method according to an embodiment of this application;
FIG. 2 is a schematic flowchart of another automatic resource scaling method according to an embodiment of this application;
FIG. 3 is a diagram of a structure of an automatic resource scaling apparatus according to an embodiment of this application; and
FIG. 4 is a diagram of a structure of a computer device according to an embodiment of this application.

### DESCRIPTION OF EMBODIMENTS

Auto scaling is mainly divided into two types. One type is horizontal scaling, that is, an increase or a decrease in a quantity of instances (workers), for example, horizontal pod autoscaling (horizontal pod autoscaling, HPA); and the other type is vertical scaling, that is, an increase or a decrease in a quantity of resources that can be used by a single instance.

An example in which a transcoding service is used. A conventional AS service usually controls resource scale-out and scale-in according to an HPA policy. A main method is to monitor resource utilization (such as CPU utilization) and configure a scale-out step and a scale-in step. However, in this implementation, a future service requirement cannot be sensed, and scale-out or scale-in is performed only based on indicators such as CPU utilization. The policy is simple, and there is a delay problem for resource scale-out and scale-in. As a result, after a service peak, a system is still scaled out, and after a service off-peak, the system is still scaled in. As services change, overall CPU utilization is low and a large quantity of resources are wasted, and it is difficult to maintain high utilization.

To resolve the foregoing problem, an embodiment of this application provides an automatic resource scaling method, to implement automatic resource scale-out or scale-in, avoid a delay problem of resource scale-out or scale-in, and further improve resource utilization.

The automatic resource scaling method provided in this embodiment of this application is applicable to a system that includes an AS service, for example, a cloud computing system, a cloud storage system, or an edge cloud system, or a CDN or another scenario. The method may be performed by a server, a node, or an instance in a cloud system or a CDN. The server, the node, or the instance may be an independent server, node, or instance that is only used to perform an automatic resource scaling function, or may be deployed in an integrated manner with another functional module. This is not limited in this embodiment of this application.

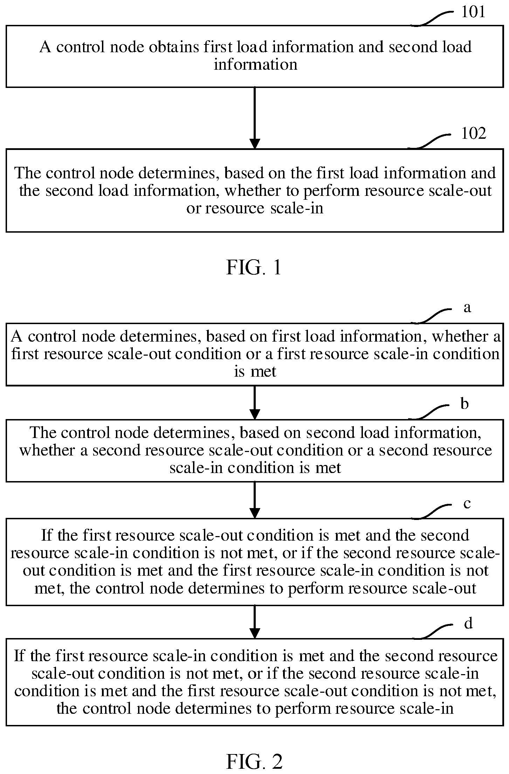

FIG. 1 is a schematic flowchart of an automatic resource scaling method according to an embodiment of this application. In FIG. 1, an example in which an independent node (a control node for short) performs the method is used for description. As shown in the figure, the method may include the following steps.

Step 101: The control node obtains first load information and second load information.

The first load information indicates current actual load information, for example, information about current CPU utilization, current memory utilization, and a current service volume.

The second load information represents load information for estimating a current or future load. For example, the second load information may be historical load information or a historical service volume. Alternatively, the second load information may be load information that is calculated based on historical load information or a historical service volume and that can be used to estimate a current or future load, for example, a change rate of a used resource in a preset time period (a past time period), a change rate of a service volume in a preset time period (a past time period), or the like. For example, the second load information may be a change rate of resource utilization in past 30 minutes. For another example, the second load information may alternatively be historical load information of a same time period, for example, the second load information may be a total service volume of yesterday. Alternatively, if a current moment is 10:00 a.m., the second load information may be service volume information from 10:00 a.m. to 10:30 a.m. yesterday; or if today is Monday, the second load information may alternatively be service volume information of Monday in historical data.

Step 102: The control node determines, based on the first load information and the second load information, whether to perform resource scale-out or resource scale-in.

As the first load information indicates a current actual load status, the control node may determine a current load status based on the first load information, for example, determine that a current load is heavy or a current load is light. In addition, as the second load information is load information that can be used to estimate a current or future load, the control node may estimate a current or future load status based on the second load information, for example, estimate that a load in a future period of time is heavy or a load in a future period of time is light. The control node may consider both the current actual load status and an estimated load status in the future period of time, to make a decision that not only meets a service requirement but also helps improve resource utilization.

For example, although the control node determines, based on the first load information, that a current load is heavy, the control node determines, according to a conventional auto scaling policy, that resource scale-out needs to be performed. However, in this embodiment of this application, if the control node further determines, based on the second load information, that a load significantly decreases in the future period of time, the control node may determine that resource scale-out does not need to be performed. In this way, a significant decrease in resource utilization due to a decrease in a service volume after resource scale-out can be avoided to avoid a resource waste.

For another example, although the control node determines, based on the first load information, that a current load is light, the control node determines, according to a conventional auto scaling policy, that resource scale-in needs to be performed. However, in this embodiment of this application, if the control node further determines, based on the second load information, that a service volume increases significantly in the future period of time, the control node may determine that resource scale-in does not need to be performed. In this way, issues of a heavy load and impact on quality of service of a service caused by an increase in the service volume after resource scale-in can be avoided.

In the foregoing embodiment, the control node can determine the current actual load status based on the obtained first load information, and can further estimate the load status in the future period of time based on the second load information, to determine, based on the current actual load status and the estimated load status in the future period of time, whether to perform resource scale-out or scale-in. Compared with a conventional solution in which scale-out or scale-in is performed only based on current resource utilization, the foregoing solution can determine, with reference to a pre-determined load status, whether to perform resource scale-out or scale-in, so that an available resource of a system better meets an actual requirement, and a delay caused by an auto scaling policy is reduced.

In a possible implementation, step 102 may include steps shown in FIG. 2.

Step a: The control node determines, based on the first load information, whether a first resource scale-out condition or a first resource scale-in condition is met.

For example, the first load information may be the current resource utilization, the first resource scale-out condition may be that resource utilization is greater than or equal to a first utilization threshold, and the first resource scale-in condition may be that resource utilization is less than or equal to a second utilization threshold, where the second utilization threshold is less than the first utilization threshold. If the current resource utilization is greater than or equal to the first utilization threshold, it indicates that the current load is heavy, and the control node determines that the first resource scale-out condition is met; if the current resource utilization is less than or equal to the second utilization threshold, it indicates that the current load is light, and the controller node determines that the first resource scaling-in condition is met; and if the current resource utilization is greater than the second utilization threshold and less than the first utilization threshold, it indicates that the current load is within a normal range.

Step b: The control node determines, based on the second load information, whether a second resource scale-out condition or a second resource scale-in condition is met.

For example, the second load information may be a change rate of resource utilization determined based on load information in a past period of time. Correspondingly, the second resource scale-out condition may be that the change rate of the resource utilization is greater than or equal to a first change rate threshold (for example, the first change rate threshold is a positive number), and the second resource scale-in condition may be that the resource utilization is less than or equal to a second change rate threshold (for example, the second change rate threshold is a negative number). If a current change rate is greater than or equal to the first change rate threshold, it may be considered that a service volume increases, the resource utilization is in an increasing trend, and an increasing speed is fast, and the control node determines that the second resource scale-out condition is met. If a current change rate is less than or equal to the second change rate threshold, it may be considered that a service volume decreases, the resource utilization is in a decreasing trend, and a decreasing speed is fast, and the control node determines that the second resource scale-in condition is met. If the current resource utilization is greater than the second utilization threshold and less than the first utilization threshold, it indicates that the current resource utilization changes within a normal range.

For another example, if the current moment is 10:00 a.m., the second load information may be the service volume information from 10:00 a.m. to 10:30 a.m. yesterday, the second resource scale-out condition may be that resource utilization of a currently used node for processing a service from 10:00 a.m. to 10:30 a.m. yesterday is greater than or equal to the first utilization threshold, and the second resource scale-in condition is that the resource utilization of the currently used node for processing the service from 10:00 a.m. to 10:30 a.m. yesterday is less than or equal to the second utilization threshold.

It should be understood that the first resource scale-out condition and the first resource scale-in condition above are mutually exclusive. To be specific, if the first resource scale-out condition is met, the first resource scale-in condition cannot be met, or if the first resource scale-in condition is met, the first resource scale-out condition cannot be met. Similarly, the second resource scale-out condition and the second resource scale-in condition above are also mutually exclusive. To be specific, if the second resource scale-out condition is met, the second resource scale-in condition cannot be met; or if the second resource scale-in condition is met, the second resource scale-out condition cannot be met.

A sequence of the foregoing step a and step b is not limited in this embodiment of this application. Alternatively, step b may be performed before step a, or step b and step a may be performed simultaneously.

Step c: If the first resource scale-out condition is met and the second resource scale-in condition is not met, or if the second resource scale-out condition is met and the first resource scale-in condition is not met, the control node determines to perform resource scale-out.

If both the first resource scale-out condition and the second resource scale-out condition are met, it indicates that a current actual load is heavy, and the load is still heavy in the future period of time. In this case, the control node may determine to perform resource scale-out.

If the first resource scale-out condition is met, but the second resource scale-out condition is not met, and the second resource scale-in condition is not met, it indicates that a current actual load is heavy, and it is predicted that the load does not significantly increase but significantly decreases in the future period of time. In this case, the control node may also determine to perform resource scale-out. Alternatively, it may be set that neither scale-out nor scale-in is performed when only the first resource scale-out condition is met.

If both the first resource scale-out condition and the second resource scale-in condition are met, it indicates that, although a current actual load is heavy, the load is predicted to significantly decrease in the future period of time, and the control node may determine that resource scale-out does not need to be performed. In this way, a significant decrease in resource utilization due to a decrease in a service volume after resource scale-out can be avoided to avoid a resource waste.

Step d: If the first resource scale-in condition is met and the second resource scale-out condition is not met, or if the second resource scale-in condition is met and the first resource scale-out condition is not met, the control node determines to perform resource scale-in.

If both the first resource scale-in condition and the second resource scale-in condition are met, it indicates that a current actual load is light, and the load significantly decreases in the future period of time. In this case, the control node may determine to perform resource scale-in to avoid a resource waste.

If the first resource scale-in condition is met, but the second resource scale-out condition is not met, and the second resource scale-in condition is not met, it indicates that a current actual load is light, and it is predicted that the load does not significantly increase but significantly decreases in the future period of time. In this case, the control node may also determine to perform resource scale-in. Alternatively, it may be set that neither scale-out nor scale-in is performed when only the first resource scale-in condition is met.

If both the first resource scale-in condition and the second resource scale-out condition are met, it indicates that, although a current actual load is light, the load is predicted to significantly increase in the future period of time, and the control node may determine that resource scale-in does not need to be performed. In this way, issues of a heavy load and impact on quality of service of a service caused by an increase in a service volume after resource scale-in can be avoided.

A sequence of the foregoing step c and step d is not limited in this embodiment of this application. Alternatively, step d may be performed before step c, or step c and step d may be performed simultaneously.

In a possible implementation, if the first resource scale-out condition is determined based on the first load information, the control node may further determine a first scale-out step based on the first load information. For example, it may be set that if CPU utilization is greater than or equal to 70%, scale-out needs to be performed. If the current CPU utilization is greater than or equal to 70% and less than 80%, X A nodes are added to increase a computing resource, and in this case, X is the foregoing step; or M% of the computing resource is added, and M% is the foregoing step. If the current CPU utilization is greater than or equal to 80% and less than 90%, Y A nodes are added to increase a computing resource, where Y>X, and in this case, Y is the foregoing step; or N% of the computing resource is added, where N>M, and N% is the foregoing step.

Further, if the first scale-out step determined by the control node based on the first load information is different from a second scale-out step determined based on the second load information, the control node may perform resource scale-out based on a larger step of the first scale-out step and the second scale-out step. For example, if the determined first scale-out step is two A nodes, and the determined second scale-out step is one A node, the two A nodes are used as an actual scale-out step; or if the determined first scale-out step is two A nodes, and the determined second scale-out step is three A nodes, the three A nodes are used as an actual scale-out step.

In some embodiments, if the control node determines the first scale-out step based on the first load information, but determines, based on the second load information, that neither the second scale-out condition nor the second scale-in condition is met, the control node may perform resource scale-out based on the determined first scale-out step. Alternatively, if the control node determines, based on the first load information, that neither the first scale-out condition nor the first scale-in condition is met, but determines, based on the second load information, that the second scale-out condition is met, the control node further determines the second scale-out step, and the control node may perform resource scale-out based on the determined second scale-out step.

Similarly, if a first scale-in step determined by the control node based on the first load information is different from a second scale-in step determined based on the second load information, the control node may perform resource scale-out based on a larger step of the first scale-in step and the second scale-in step. For example, if the determined first scale-in step is two A nodes, and the determined second scale-in step is one A node, the two A nodes are used as an actual scale-in step; or if the determined first scale-in step is two A nodes, and the determined second scale-in step is three A nodes, the three A nodes are used as an actual scale-in step.

In some other embodiments, if the control node determines the first scale-in step based on the first load information, but determines, based on the second load information, that neither the second scale-out condition nor the second scale-in condition is met, the control node may perform resource scale-in based on the determined first scale-in step. Alternatively, if the control node determines, based on the first load information, that neither the first scale-out condition nor the first scale-in condition is met, but determines, based on the second load information, that the second scale-in condition is met, the control node further determines the second scale-in step, and the control node may perform resource scale-in based on the determined second scale-in step.

In a conventional system that can provide an AS service, each node has a basically same resource configuration. For example, in a cloud computing system that can provide an AS service, each node has a same quantity of CPUs and each CPU has a same computing capability, to facilitate control of a control node. However, this also causes troubles to deployment of the cloud computing system. To ensure that resource configurations of nodes in the system are the same, system deployment costs are increased.

To reduce costs, in this embodiment of this application, there may be a plurality of resource pools in the system, and nodes in different resource pools have different configuration information. For example, a resource pool A and a resource pool B may be deployed in the system. The resource pool A includes several A nodes, the resource pool B includes several B nodes, and one A node can provide approximately as many computing resources as two B nodes can provide.

In this case, before providing a scale-out service, the control node needs to first obtain, from the different resource pools, resource configuration information of nodes that with ability to be scaled out. Therefore, when it is determined that resource scale-out needs to be performed, a node to be scaled out is determined based on a resource that needs to be scaled out and the resource configuration information of each node. Since different nodes have different resource configuration information, when determining to perform scale-out, the control node cannot determine only a quantity of nodes to be scaled out, as in a conventional AS service, but needs to select, based on the resource configuration information of each node, a node to be scaled out. For example, resource configuration information of an A node in the resource pool A and a quantity of available A nodes are obtained, and resource configuration information of a B node in the resource pool B and a quantity of available B nodes are obtained, where one A node can provide approximately as many computing resources as two B nodes can provide. If the control node determines that a scale-out step is two A nodes, the control node may select two A nodes, or select four B nodes, or may select one A node and two B nodes from nodes that with ability to be scaled out. Alternatively, in consideration that it is difficult for one node to achieve 100% resource utilization, when it is determined to select a B node, a node whose theoretical computing resource is slightly greater than a needed computing resource may be selected, that is, B nodes whose quantity is greater than four may be selected.

Similarly, before providing a scale-in service, the control node needs to first obtain resource configuration information of each used node. Therefore, when it is determined that resource scale-in needs to be performed, a node to be scaled in is determined based on a resource that needs to be scaled in and resource configuration information of each used node. Since different nodes have different resource configuration information, when determining to perform scale-in, the control node cannot determine only a quantity of nodes to be scaled in, as in a conventional AS service, but needs to select, based on the resource configuration information of each node, a node to be scaled in. For example, if the control node determines that a scale-in step is two A nodes, the control node may select two A nodes, or select four B nodes, or may select one A node and two B nodes from used nodes.

When resource scale-out or scale-in is performed, a node with a high resource configuration and a node with a low resource configuration can be fully utilized, which is more conducive to improving overall resource utilization of a system and reducing resource use costs.

Based on a same technical concept, an embodiment of this application further provides an automatic resource scaling apparatus. The automatic resource scaling apparatus is configured to implement a function of the control node in the foregoing method embodiments. The apparatus may include a module/unit for performing any possible implementation in the foregoing method embodiments. The module/unit may be implemented by using hardware, or may be implemented by executing corresponding software by hardware.

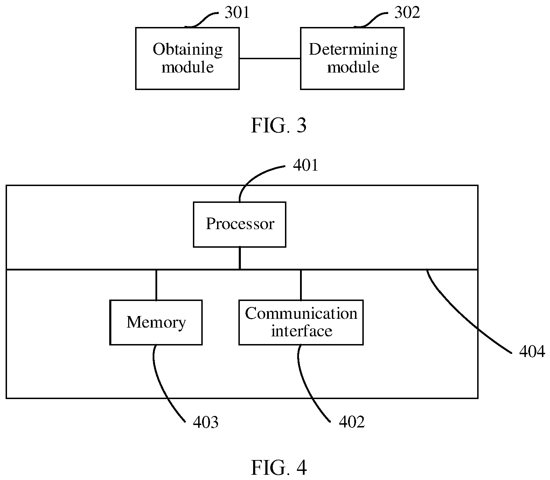

For example, as shown in FIG. 3, the apparatus may include an obtaining module 301 and a determining module 302.

The obtaining module 301 is configured to obtain first load information and second load information, where the first load information indicates current actual load information, and the second load information is load information used to estimate a current or future load.

The determining module 302 is configured to determine, based on the first load information and the second load information, whether to perform resource scale-out or resource scale-in.

In a possible implementation, the determining module 302 is specifically configured to: determine, based on the first load information, whether a first resource scale-out condition or a first resource scale-in condition is met; determine, based on the second load information, whether a second resource scale-out condition or a second resource scale-in condition is met; and if the first resource scale-out condition is met and the second resource scale-in condition is not met, or if the second resource scale-out condition is met and the first resource scale-in condition is not met, determine to perform resource scale-out; or if the first resource scale-in condition is met and the second resource scale-out condition is not met, or if the second resource scale-in condition is met and the first resource scale-out condition is not met, determine to perform resource scale-in.

In a possible implementation, the determining module 302 is further configured to: if determining, based on the first load information, that the first resource scale-out condition is met, determine a first scale-out step based on the first load information; if determining, based on the second load information, that the second resource scale-out condition is met, determine a second scale-out step based on the second load information; and perform resource scale-out based on a larger step of the first scale-out step and the second scale-out step; or if determining, based on the first load information, that the first resource scale-in condition is met, determine a first scale-in step based on the first load information; if determining, based on the second load information, that the second resource scale-in condition is met, determine a second scale-in step based on the second load information; and perform resource scale-in based on a larger step of the first scale-in step and the second scale-in step.

In a possible implementation, the second load information includes a change rate of a used resource in a preset time period, and/or a change rate of a service volume in a preset time period.

In a possible implementation, the second load information includes historical load information of a same time period.

In a possible implementation, the obtaining module 301 is further configured to obtain, from different resource pools, configuration information of nodes that with ability to be scaled out, where nodes in the different resource pools have different configuration information; and the determining module 302 is further configured to: when determining to perform resource scale-out, determine, based on a resource that needs to be scaled out and the configuration information of each node that with ability to be scaled out, a node to be scaled out.

In a possible implementation, the obtaining module 301 is further configured to obtain configuration information of currently used nodes; and the determining module 302 is further configured to: when determining to perform resource scale-in, determine, based on a resource that needs to be scaled in and the configuration information of each currently used node, a node to be scaled in.

The obtaining module and the determining module may be implemented by using software, or may be implemented by using hardware. For example, a module is used as an example of a software functional unit, and the determining module may include code being run on a computing instance. The computing instance may include at least one of the following: a physical host (a computing device), a virtual machine, or a container. Further, a quantity of the foregoing computing instance may be one or more. For example, the determining module may include code being run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs, where each AZ includes one data center or a plurality of data centers that are geographically close to each other. Usually, one region may include a plurality of AZs. Similarly, the plurality of hosts/virtual machines/containers used to run the code may be distributed in a same virtual private cloud (virtual private cloud, VPC), or may be distributed in a plurality of VPCs. Usually, one VPC is arranged in one region. A communication gateway needs to be arranged in each VPC for communication between two VPCs in a same region or between VPCs in different regions, and interconnection between VPCs is implemented through the communication gateway. A module is used as an example of a hardware functional unit, and the determining module may include at least one computing device, like a server. Alternatively, the determining module may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field programmable gate array (field programmable gate array, FPGA), a generic array logic (generic array logic, GAL), or any combination thereof. The obtaining module is similar to the determining module. Details are not described again.

It should be noted that, in another embodiment, the determining module may be configured to perform another step, for example, an obtaining step, in the foregoing method, the obtaining module may also be configured to perform any step in the foregoing method, and steps that the obtaining module and the determining module are responsible for implementing may be specified as needed. The obtaining module and the determining module respectively implement different steps in the foregoing method to implement all functions of the automatic resource scaling apparatus.

Based on a same technical concept, an embodiment of this application further provides a computer device, configured to implement a function of the control node in the foregoing method embodiments. The computer device includes a processor 401 shown in FIG. 4, and a communication interface 402 connected to the processor 401.

The processor 401 may be a general-purpose processor, a microprocessor, an application-specific integrated circuit (application-specific integrated circuit, ASIC), a field programmable gate array (field programmable gate array, FPGA) or another programmable logic device, a discrete gate or a transistor logic device, one or more integrated circuits configured to control program execution of the solutions in this application, or the like. The general-purpose processor may be a microprocessor or any conventional processor or the like. The steps of the method disclosed with reference to embodiments of this application may be directly performed by a hardware processor, or may be performed by using a combination of hardware in the processor and a software module.

The communication interface 402 is configured to communicate with another device, for example, a PCI bus interface, an Ethernet, a radio access network (radio access network, RAN), or a wireless local area network (wireless local area network, WLAN).

In this embodiment of this application, the processor 401 is configured to: invoke the communication interface 402 to perform a receiving and/or sending function, and perform the method according to any one of the foregoing possible implementations.

Further, the computer device may also include a memory 403 and a communication bus 404.

The memory 403 is configured to store program instructions and/or data, so that the processor 401 invokes the instructions and/or the data stored in the memory 403, to implement the foregoing functions of the processor 401. The memory 403 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM) or any other medium that can be used to carry or store expected program code in a form of instructions or a data structure and that is accessible by a computer, but is not limited thereto. The memory 403 may exist independently, for example, an off-chip memory, and is connected to the processor 401 through the communication bus 404. Alternatively, the memory 403 may be integrated with the processor 401.

The communication bus 404 may include a path, which is configured to transfer information between the foregoing components.

For example, the processor 401 may perform the following steps through the communication interface 402: obtaining first load information and second load information, where the first load information indicates current actual load information, and the second load information is load information used to estimate a future load; and determining, based on the first load information and the second load information, whether to perform resource scale-out or resource scale-in.

In a possible implementation, when the processor 401 determines, based on the first load information and the second load information, whether to perform resource scale-out or resource scale-in, the processor 401 is specifically configured to: determine, based on the first load information, whether a first resource scale-out condition or a first resource scale-in condition is met; determine, based on the second load information, whether a second resource scale-out condition or a second resource scale-in condition is met; and if the first resource scale-out condition is met and the second resource scale-in condition is not met, or if the second resource scale-out condition is met and the first resource scale-in condition is not met, determine to perform resource scale-out; or if the first resource scale-in condition is met and the second resource scale-out condition is not met, or if the second resource scale-in condition is met and the first resource scale-out condition is not met, determine to perform resource scale-in.

In a possible implementation, the processor 401 is further configured to: if determining, based on the first load information, that the first resource scale-out condition is met, determine a first scale-out step based on the first load information; if determining, based on the second load information, that the second resource scale-out condition is met, determine a second scale-out step based on the second load information; and perform resource scale-out based on a larger step of the first scale-out step and the second scale-out step; or if determining, based on the first load information, that the first resource scale-in condition is met, determine a first scale-in step based on the first load information; if determining, based on the second load information, that the second resource scale-in condition is met, determine a second scale-in step based on the second load information; and perform resource scale-in based on a larger step of the first scale-in step and the second scale-in step.

In a possible implementation, the second load information includes a change rate of a used resource in a preset time period, and/or a change rate of a service volume in a preset time period.

In a possible implementation, the second load information includes historical load information of a same time period.

In a possible implementation, the processor 401 is further configured to: obtain, from different resource pools, configuration information of each node that with ability to be scaled out, where nodes in the different resource pools have different configuration information; and when determining to perform resource scale-out, determine, based on a resource that needs to be scaled out and the configuration information of each node that with ability to be scaled out, a node to be scaled out.

In a possible implementation, the processor 401 is further configured to: obtain configuration information of currently used nodes; and when determining to perform resource scale-in, determine, based on a resource that needs to be scaled in and the configuration information of each currently used node, a node to be scaled in.

Based on a same technical concept, an embodiment of this application provides an automatic resource scaling system, including the automatic resource scaling apparatus in any one of the foregoing implementations and a plurality of nodes that provide resources.

An embodiment of this application further provides a computing device cluster, including at least one computing device, where each computing device includes a processor and a memory; and the processor of the at least one computing device is configured to execute instructions stored in the memory of the at least one computing device, to enable the computing device cluster to perform the foregoing method embodiments. The foregoing computing device may be a server, for example, a central server, an edge server, or a local server in a local data center. In some embodiments, the computing device may alternatively be a terminal device, for example, a desktop computer, a notebook computer, or a smartphone.

In some possible implementations, memories of one or more computing devices in the foregoing computing device cluster may separately store a part of instructions used to perform the automatic resource scaling method. In other words, a combination of one or more computing devices may jointly execute instructions used to perform the automatic resource scaling method.

It should be noted that memories of different computing devices in the computing device cluster may store different instructions respectively, where the instructions are used to perform a part of functions of the automatic resource scaling apparatus. In other words, the instructions stored in the memories of the different computing devices may implement functions of one or more of the obtaining module and the determining module.

In some possible implementations, the one or more computing devices in the computing device cluster may be connected through a network. The network may be a wide area network, a local area network, or the like.

Based on a same technical concept, an embodiment of this application further provides a computer program product including instructions. When the instructions are run by a computing device cluster, the computing device cluster performs the foregoing method embodiments.

Based on a same technical concept, an embodiment of this application further provides a computer-readable storage medium, where the computer-readable storage medium stores computer-readable instructions. When the computer-readable instructions are run on a computer, the foregoing method embodiments are performed.

Based on a same technical concept, an embodiment of this application further provides a computer program product including instructions. When the computer program product runs on a computer, the foregoing method embodiments are performed.

It should be understood that, in the descriptions of this application, terms such as "first" and "second" are merely used for distinction and description, and cannot be understood as an indication or implication of relative importance or an indication or implication of a sequence. Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product based on embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that an apparatus for implementing a specific function in one or more procedures in the flowcharts and/or in one or more blocks in the block diagrams is generated according to the instructions executed by a computer or a processor of the another programmable data processing device.

These computer program instructions may alternatively be stored in a computer-readable memory that can instruct a computer or another programmable data processing device to work in a specific manner, so that an artifact that includes an instruction apparatus is generated according to the instructions stored in the computer-readable memory. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although embodiments of this application have been described, other changes and modifications may be made to embodiments once a person skilled in the art learns the basic inventive concept. Therefore, the appended claims are intended to be construed as to cover the embodiments and all changes and modifications falling within the scope of this application.

Clearly, a person skilled in the art may make various modifications and variations to embodiments of this application without departing from the scope of embodiments of this application. In this way, this application is intended to cover these modifications and variations of embodiments of this application provided that they fall within the scope of the claims of this application and their equivalent technologies.

## Claims

1. An automatic resource scaling method, wherein the method comprises:
Obtaining first load information and second load information, wherein the first load information indicates current actual load information, and the second load information is load information used to estimate a future load; and
Determining, based on the first load information and the second load information, whether to perform resource scale-out or resource scale-in.

2. The method according to claim 1, wherein the determining, based on the first load information and the second load information, whether to perform resource scale-out or resource scale-in comprises:
Determining, based on the first load information, whether a first resource scale-out condition or a first resource scale-in condition is met;
Determining, based on the second load information, whether a second resource scale-out condition or a second resource scale-in condition is met; and
if the first resource scale-out condition is met and the second resource scale-in condition is not met, or if the second resource scale-out condition is met and the first resource scale-in condition is not met, determining to perform resource scale-out; or
if the first resource scale-in condition is met and the second resource scale-out condition is not met, or if the second resource scale-in condition is met and the first resource scale-out condition is not met, determining to perform resource scale-in.

3. The method according to claim 2, wherein the method further comprises:
if determining, based on the first load information, that the first resource scale-out condition is met, determining a first scale-out step based on the first load information; if determining, based on the second load information, that the second resource scale-out condition is met, determining a second scale-out step based on the second load information; and performing resource scale-out based on a larger step of the first scale-out step and the second scale-out step; or
if determining, based on the first load information, that the first resource scale-in condition is met, determining a first scale-in step based on the first load information; if determining, based on the second load information, that the second resource scale-in condition is met, determining a second scale-in step based on the second load information; and performing resource scale-in based on a larger step of the first scale-in step and the second scale-in step.

4. The method according to any one of claims 1 to 3, wherein the second load information comprises a change rate of a used resource in a preset time period, and/or a change rate of a service volume in a preset time period.

5. The method according to any one of claims 1 to 3, wherein the second load information comprises historical load information of a same time period.

6. The method according to any one of claims 1 to 5, wherein the method further comprises:
obtaining, from different resource pools, configuration information of nodes that with ability to be scaled out, wherein nodes in the different resource pools have different configuration information; and
when determining to perform resource scale-out, determining, based on a resource that needs to be scaled out and the configuration information of each node that with ability to be scaled out, a node to be scaled out.

7. The method according to any one of claims 1 to 5, wherein the method further comprises:
obtaining configuration information of currently used nodes; and
when determining to perform resource scale-in, determining, based on a resource that needs to be scaled in and the configuration information of each currently used node, a node to be scaled in.

8. An automatic resource scaling apparatus, wherein the apparatus comprises:
an obtaining module, configured to obtain first load information and second load information, wherein the first load information indicates current actual load information, and the second load information is load information used to estimate a future load; and
a determining module, configured to determine, based on the first load information and the second load information, whether to perform resource scale-out or resource scale-in.

9. The apparatus according to claim 8, wherein the determining module is specifically configured to:
determine, based on the first load information, whether a first resource scale-out condition or a first resource scale-in condition is met;
determine, based on the second load information, whether a second resource scale-out condition or a second resource scale-in condition is met; and
if the first resource scale-out condition is met and the second resource scale-in condition is not met, or if the second resource scale-out condition is met and the first resource scale-in condition is not met, determine to perform resource scale-out; or
if the first resource scale-in condition is met and the second resource scale-out condition is not met, or if the second resource scale-in condition is met and the first resource scale-out condition is not met, determine to perform resource scale-in.

10. The apparatus according to claim 9, wherein the determining module is further configured to:
if determining, based on the first load information, that the first resource scale-out condition is met, determine a first scale-out step based on the first load information; if determining, based on the second load information, that the second resource scale-out condition is met, determine a second scale-out step based on the second load information; and perform resource scale-out based on a larger step of the first scale-out step and the second scale-out step; or
if determining, based on the first load information, that the first resource scale-in condition is met, determine a first scale-in step based on the first load information; if determining, based on the second load information, that the second resource scale-in condition is met, determine a second scale-in step based on the second load information; and perform resource scale-in based on a larger step of the first scale-in step and the second scale-in step.

11. The apparatus according to any one of claims 8 to 10, wherein the second load information comprises a change rate of a used resource in a preset time period, and/or a change rate of a service volume in a preset time period.

12. The apparatus according to any one of claims 8 to 10, wherein the second load information comprises historical load information of a same time period.

13. The apparatus according to any one of claims 8 to 12, wherein the obtaining module is further configured to obtain, from different resource pools, configuration information of nodes that with ability to be scaled out, wherein nodes in the different resource pools have different configuration information; and
the determining module is further configured to: when determining to perform resource scale-out, determine, based on a resource that needs to be scaled out and the configuration information of each node that with ability to be scaled out, a node to be scaled out.

14. The apparatus according to any one of claims 8 to 12, wherein the obtaining module is further configured to obtain configuration information of currently used nodes; and
the determining module is further configured to: when determining to perform resource scale-in, determine, based on a resource that needs to be scaled in and the configuration information of each currently used node, a node to be scaled in.

15. An automatic resource scaling system, comprising the automatic resource scaling apparatus according to any one of claims 8 to 14, and a plurality of nodes that provide resources.

16. A computer device, wherein the computer device comprises a memory and a processor;
the memory stores a computer program; and
the processor is configured to invoke the computer program stored in the memory, to perform the method according to any one of claims 1 to 7.

17. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 7.

18. A computer program product comprising instructions, wherein when the instructions are run by a computing device cluster, the computing device cluster is enabled to perform the method according to any one of claims 1 to 7.

19. A computer-readable storage medium, wherein the computer-readable storage medium stores instructions; and when the instructions are run on a computer, the computer is enabled to perform the method according to any one of claims 1 to 7.
